Europäisches Patentamt

(19) European Patent Office

Office européen des brevets

(11) Publication number: **0 057 848**
**B1**

(12) **EUROPEAN PATENT SPECIFICATION**

(45) Date of publication of patent specification: **12.11.86**

(21) Application number: **82100531.1**

(22) Date of filing: **27.01.82**

(51) Int. Cl.⁴: **B 22 F 3/10,** B 01 D 39/20, C 22 C 1/08

(54) Metallic sintered body and process for preparing the same.

(30) Priority: **29.01.81 JP 12559/81**
**06.04.81 JP 52145/81**
**20.10.81 JP 168253/81**

(43) Date of publication of application:
**18.08.82 Bulletin 82/33**

(45) Publication of the grant of the patent:
**12.11.86 Bulletin 86/46**

(84) Designated Contracting States:
**BE DE FR GB IT**

(56) References cited:
**DE-A-2 459 475**
**DE-B-1 118 468**
**DE-B-2 005 571**
**GB-A- 781 433**
**GB-A-1 427 642**
**US-A-2 709 651**
**US-A-2 792 302**
**US-A-4 202 689**

(73) Proprietor: **NIPPON SEISEN CO., LTD.**
**45, Koraibashi 5-chome Higashi-ku**
**Osaka-shi (JP)**

(72) Inventor: **Ishibe, Hideomi**
**29-351, Koaza-Kamanoko Oaza-Kitaokawara**
**Minamiyamashiro-mura Soraku-gun Kyoto-fu**
**(JP)**
Inventor: **Okazima, Tadayuki**
**37-3-206, Ominemoto-machi 2-chome**
**Hirakata-shi Osaka-fu (JP)**

(74) Representative: **Türk, Dietmar, Dr. rer. nat. et al**
**Türk, Gille + Hrabal Patentanwälte Bruckner**
**Strasse 20**
**D-4000 Düsseldorf 13 (DE)**

(56) References cited:
**CHEMIE INGENIEUR TECHNIK, vol. 48, nr. 5,**
**1976, Weinheim, G. HOFFMANN et al.**
**"Eigenschaften und Anwendung gesinterter,**
**korrosionsbeständiger Filterwerkstoffe", pages**
**410-416**

Courier Press, Leamington Spa, England.

EP 0 057 848 B1

## Description

The present invention relates to a metallic sintered body, and more particularly to a metallic sintered body having very fine pores of uniform size and moreover having a high porosity and a process for the preparation thereof.

A filter medium for collecting dust or for purifying a gas or liquid is desired to have fine pores of uniform size and high porosities from the viewpoint of low pressure loss, precise collection of fine contaminants, high filtration capacity and long life. Usually, a sintered body of fine metal particles has been employed as a filter medium for collecting dust or for purifying air or a liquid. The sintered body is superior in heat resistance and mechanical strength to a paper filter and a filter medium made from a woven synthetic fiber, but it is in general difficult to form fine pores of uniform size. The sintered body of fine metal particles has been prepared by sintering the particles in a mold at a high temperature under a high pressure. In the so prepared sintered body, relatively large pores and fine pores are present together and the pore size distribution is wide. Also, in case of preparing the sintered body having fine pores, it is hard to obtain the sintered body having a high porosity. In order to solve these problems, there are proposed various processes, e.g. a process in which a felt of a metal fiber having an irregular polygonal shape in section is impregnated with fine metal particles and then sintered. However, these known processes are still unsatisfactory for providing a sintered body having fine and uniform pores.

It is known from GB—A—781 433 to sinter mixtures of metal powders with thermosetting synthetic resins. There is no hint, however in the above document to use mixtures of metal powders containing fibrous metal powder.

From Chemie Ingenieur Technik, vol. 48, No. 5, 1976 pages 410—416 are known filter materials from mixtures of metallic fibers and powders without using thermosetting synthetic resins. However, in said document it is stated that the filters on the basis of potato-shape-powders are preferable to the filters on the basis of mixtures of fibers and powders.

It is an object of the present invention to provide a metallic sintered body having fine and uniform pores and moreover having a high porosity.

A further object of the present invention is to provide a metallic sintered body useful as a filter medium which is low in pressure loss and is long in life and can precisely catch fine contaminants with high capacity.

Another object of the present invention is to provide a process for preparing a metallic sintered body having characteristics as a filter medium and a molecular sieve.

A still further object of the present invention is to provide a process for preparing a metallic sintered body, which is good in workability and can provide a metallic sintered body having uniform and fine pores and a high porosity.

These and other objects of the present invention will become apparent from the description hereinafter.

It has now been found that the above-mentioned objects can be attained when a metallic sintered body is prepared by compacting a metal powder, a fibrous metal powder and a thermosetting resin by means of hot pressing and sintering the resulting compact as indicated hereinafter.

In accordance with the present invention, there is provided a metallic sintered body which is composed of fine metallic particles and has a porosity of at least 45%, a ratio of the intersecting point pressure to the initial bubble point pressure of not more than 1.35 and a filtration size of not more than about 15 μm.

The sintered body of the present invention has fine and uniform pores and a high porosity, and accordingly is very useful as a filter which has a high filtration capacity and can precisely collect fine contaminants.

The present invention also provides a process for preparing a metallic sintered body. The process not only can provide a metallic sintered body having fine pores of uniform size and a high porosity, but also has the advantage that the workability is good.

Fig. 1 is a schematic section view showing one instance of hot press machines as used in the present invention;

Figs. 2A to 2E are microphotographs of the sintered bodies of the present invention;

Fig. 4A is a graph showing the relationship between the pressure loss and the flow rate of a fluid;

The fine metal particles used in the present invention are a metal powder and a fibrous metal powder, such as stainless steel, steel, copper, zinc or their alloys with other metals.

Any known metal powders such as pulverized powder and atomized powder are employed in the present invention. In the present invention, a stainless steel powder, e.g. stainless steel atomized powder, is suitably employed from the viewpoint of corrosion resistance, etc. The particle size of the metal powder is not more than about 100 meshes (Tyler mesh, hereinafter the same), preferably not more than about 200 meshes. Particularly, when a filter of which the filtration size is not more than about 15 μm, especially not more than about 10 μm, is desired, the metal powder having a particle size of not more than about 200 meshes (about 74 μm) is preferably employed. The term "filtration size" as used herein means the particle diameter that 98% of particles can be caught.

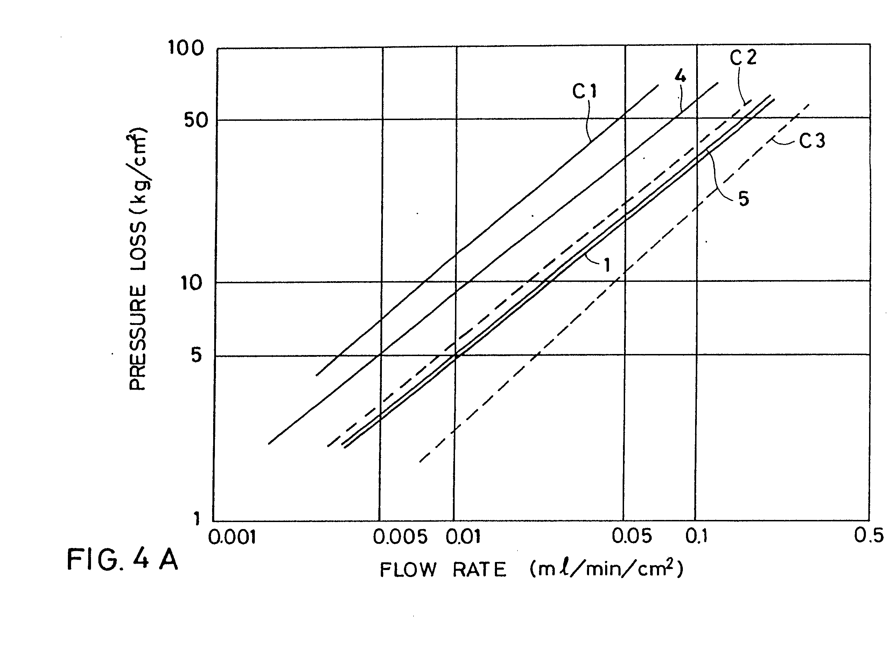

The shape of the metal powder is not particularly limited, and an irregular powder is also usable in the present invention. In case of employing the irregular powder, there can be obtained a filter having an excellent property of collecting solid or gel contaminants, because of having an increased specific surface area and pores of complicated shape. For instance, the irregular powder is prepared by a particular atomization in which a molten metal, the temperature of which is made as low as possible, is atomized into a liquid atomization medium having a large cooling effect so that atomized molten metal droplets are solidified within the period that no surface tension acts on the droplets. The thus obtained irregular atomized powder is novel, and the packing density thereof falls within the range of 1 to 4. The packing density of a known atomized powder is more than 4.5. Photographs of an irregular powder enlarged 42 times and 90 times by a scanning electron microscope are shown in Figs. 3A and 3B, respectively.

The fibrous powder used in the present invention is short metal fibers. A stainless steel short fiber having a diameter of 2 to 20 μm and an aspect ratio of the length to the diameter in the range of 3 to 50 is preferably employed.

The stainless steel short fiber is prepared by subjecting a stainless steel long fiber to a heat treatment for crystal grain growth adjustment and then subjecting the heat treated fiber to intergranular selective corrosion in an aqueous acidic solution. As a stainless steel long fiber, there are employed any known fibers of stainless steels such as austenitic stainless steels, martensitic stainless steels and ferritic stainless steels, preferably austenitic stainless steels such as the socalled 18-8 type stainless steel of which the basic composition is a low content of carbon, 17 to 19% by weight of chromium and 8 to 10% by weight of nickel. The length of the stainless steel long fiber to be treated is not particularly limited, but the fibers having a length of 2 to 20 cm, e.g. slivers are convenient for the treating procedure. The use of a stainless steel long fiber having a diameter of less than 2 μm is not suitable, since upon intergranular selective corrosion in an acidic solution, the acid does not act on the long fiber merely to corrode the grain boundaries, but further corrode the crystal grains themselves. For this reason, when a stainless steel long fiber having a relatively small diameter, e.g. from 2 to 6 μm, is employed, it is desirable to pay attention to selection of the intergranular corrosion conditions such as the kind, concentration and temperature of the acidic solution and the immersion time so that only the grain boundaries are selectively corroded. On the other hand, when the diameter is more than 20 μm, it is difficult to shorten the stainless steel long fiber by the intergranular corrosion. A stainless steel long fiber having a diameter of 2 to 20 μm is commercially available. In general, the smaller the diameter of a stainless steel fiber, the longer the crystal unit and consequently the longer the short fiber produced tends to become.

The heat treatment for crystal grain growth adjustment of a stainless steel long fiber is carried out in a non-oxidative atmosphere at a temperature of 900° to 1,400°C, preferably 1,000° to 1,200°C, for a prescribed period of time. By the heat treatment within the above temperature range, the stress of the distortion of crystals elongated at the time of manufacturing the stainless steel fiber disappears, and soon crystal lattices arranged in parallel in the longitudinal direction of the fiber are formed, while weak grain boundaries of lattices are decreased with the lapse of time. As a result, the distance between the grain boundaries widens, thus growing into crystal grains continuing in the longitudinal direction. The heat treatment is carried out usually for 10 minutes to 5 hours. Since the crystal grains grow with the lapse of the heat treating time, the stainless steel short fiber having a desired length can be obtained by controlling the temperature and time of the heat treatment. In order to prevent lowering of physical properties due to oxidation, the heat treatment is conducted in an atmosphere in which no oxygen is present, e.g. in an atmosphere of an inert gas such as argon gas. The heat treatment for adjusting crystal grain growth comprehends a solution treatment conducted at a temperature of 900° to 1,200°C. After the solution treatment, sensitization may be conducted at a temperature of 500° to 850°C, if desired. Such a two stage heat treatment is effective in some cases, for instance, in case of using a stainless steel fiber having a relatively high carbon content of more than 0.08% such as SUS 301 stainless steel.

The heat treated stainless steel fiber is then subjected to selective corrosion of the grain boundaries by immersing in an acidic solution, whereby bonding between the crystal grains is broken to produce short fibers. The so produced short fibers have no projections like fins, burrs or sags at both ends. As an acidic solution, there is employed an aqueous solution of an inorganic acid such as, for instance, nitric acid, hydrochloric acid, hydrofluoric acid or sulfuric acid. The acid may be employed in combination with a metal salt of an acid, e.g. a combination of sulfuric acid and cupric sulfate or a combination of sulfuric acid and ferric sulfate. A combination of hydrofluoric acid and nitric acid is preferable as an acid. The kind and concentration of the acid is selected according to the kind of the stainless steel so that only the crystal grain boundary is selectively corroded. Also, the concentration of the acid, temperature of the solution and immersion time are suitably controlling according to the diameter of the stainless steel fiber used and the desired length of the short fiber to be produced. In case of hydrofluoric acid, the concentration is usually selected from 2 to 5% by weight. Also, nitric acid is usually employed in concentrations of at most 30% by weight, and other acids than the above are usually employed in concentrations of at most 40% by weight. The immersion is usually carried out at a temperature of 20° to 50°C. Martensitic stainless steels and ferritic stainless steels are poorer in corrosion resistance and thus have a higher sensitivity to intergranular corrosion than austenitic stainless steels. Therefore, in case of martensitic or ferritic stainless steels, the intergranular corrosion treatment is conducted under a weaker condition as compared with the case of austenitic stainless steels. In order to avoid undesirable corrosion of metals, the acid solution may contain an inhibitor, e.g. an inorganic inhibitor such as a phosphate, a silicate or a chromate, and an organic inhibitor such as a high polymeric benzene derivative, quinoline, pyridine or polyethylene glycol. After the intergranular corrosion treatment, the produced stainless steel short fiber is washed with water or a hot water and then dried. Preferably, after washing the produced short fiber with a hot water at about 80°C., passivation treatment is carried out to provide the short fiber with a corrosion resistance. The passivation treatment is carried out, for instance, by immersing the short fiber in a 30% nitric acid solution at about 40°C. for 1 to 3 hours. The passivation-treated fiber is washed with water at ordinary temperature and then dried. The thus obtained short fiber, namely fibrous powder, is in the form of column having substantially the same diameter as that of the starting stainless steel long fiber, and is stable to corrosion.

In the present invention, the metal powder and the metal short fiber are employed in admixture. The mixture of the metal short fiber and the metal powder is employed, since it is possible to form fine pores of uniform size with maintaining the porosity high and to obtain a filter having a high filtration capacity and a long life. Also, though the pore shape of sintered bodies made of an atomized powder alone is ununiform somewhat, the ununiformity in pore shape is improved by admixing the atomized powder with the metal short fiber, whereby the choking of the pores upon using the sintered bodies as filters is decreased and the filtration life becomes long. The ratio of the fibrous powder to the metal powder is from 20:80 to 80:20 by weight, preferably 40:60 to 60:40 by weight.

The metallic particles, i.e. the metal powder, the metal short fiber or the mixture thereof, are surface-treated with a thermosetting resin, and are compacted by means of a hot press. The thermosetting resin can also be employed in the form of powder. In that case, the metallic particles are admixed with a powder of a thermosetting resin, e.g. a resin powder having a particle size of about 1/4 time that of a metal powder, and the mixture is compacted. The thermosetting resin is employed in an amount of 0.5 to 6% by weight, especially 1 to 3% by weight, based on the metallic particles. Examples of the thermosetting resin used in the present invention are, for instance, polyimide resin, phenol resin, alkyd resin, unsaturated polyester resin polycarbonate resin, epoxy resin, and the like. The polyimide resin is a polymer containing imide bondings in the main chain, and for instance, polypyromellitic imide which is a polycondensation product of pyromellitic dicyanhydride and a diamine, or its modified resin are employed. The use of the polyimide resin has the advantage that labors such as release of a gas from a sintering furnace and annealing treatment can be saved, thus increasing the workability, since generation of a gas at the time of sintering is a little as compared with other thermosetting resins such as phenol resin, and corrosion due to a gas of high temperature and formation of carbon can be decreased. The phenol resin used in the present invention includes the so-called resol which is a mixture of phenol alcohols produced by the reaction of a phenol compound and an excess aldehyde in the presence of an alkali catalyst, and the so-called novolak which is a dihydroxy diphenyl methane type compound produced by the reaction of an excess phenol compound and an aldehyde. Examples of the phenol compound are a monovalent phenol compound such as phenol, cresol, xylenol, p-alkylphenol or p-phenylphenol, a bivalent phenol compound such as catechol, resorcin or hydroquinone, and a trivalent phenol compound such as pyrogallol or phloroglucin. Examples of the aldehyde are formaldehyde, paraformaldehyde, hexamethylenetetraamine and furfural. Inorganic and organic acids of alkalis, or their salts are employed as reaction catalysts and hardening agents for phenol resin. For instance, hydrochloric acid, oxalic acid, acetic acid and formic acid are employed as an acid catalyst, and sodium hydroxide, potassium hydroxide and pyridine are employed as an alkali catalyst.

The surface treatment of metallic particles with a thermosetting resin is carried out in a usual manner. Usually, the metallic particles are immersed in or admixed with a solution of a resin in an organic solvent, and the solvent is evaporated. For instance, in case of employing a phenol resin as a thermosetting resin, resol or novolak is dissolved in an organic solvent such as an alcohol or acetone, and metallic particles are immersed in the solution. The solvent is then evaporated, or after taking out the particles, they are dried to remove the solvent, so that the surfaces of the particles are coated with the resin.

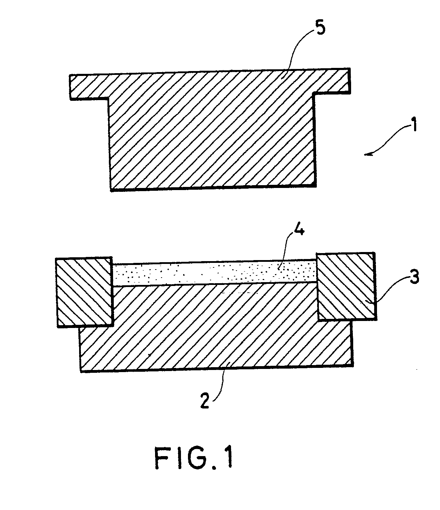

The surface-treated metallic particles or a mixture of the metallic particles and a thermosetting resin powder is molded into a desired shape by means of hot pressing. For instance, the hot pressing is carried out by employing a hot press machine 1 as schematically shown in Fig. 1. The metallic particles 4 are placed in a depressed portion formed by under mold 2 and thickness adjusting ring 3. Upper mold 5 is then moved downward to mate with the ring 3, and the particles are compressed at an elevated temperature. The hot pressing is usually carried out at a temperature of 50° to 250°C under a pressure of 50 to 200 kg/cm$^2$ (49 to 196 bar) for about 5 to about 30 minutes. Under such a condition, the hardening reaction of a thermosetting resin takes place, thus functioning as a binder for combining the metallic particles with each other. It is preferable to carry out the hot pressing at temperature at which hardening of a thermosetting resin takes place, and accordingly the hot press temperature is selected from the above range in accordance with the kind of the thermosetting resin used. For instance, in case of phenol resin, the hot pressing is preferably carried out at a temperature of 150° to 210°C. When the hot press temperature is lower than 150°C, the hardening of the phenol resin is difficult to occur, and when the temperature is higher than 210°C, thermal degradation of the phenol resin is easy to occur. Also, in case of polyimide resin, the hot press temperature is preferably selected from 220° to 230°C.

The thus obtained compact of fine metallic particles has a relatively high strength and accordingly is easy to convey. Further, the sintering of the compact need not be conducted under pressure, and it is easy to prepare a sintered body having a desired porosity. Also, a multiplicity of the compacts can be sintered at one time without using molds, and accordingly the workability at the time of sintering is good. Moreover, since the thermosetting resin is gasified at the time of sintering, intercommunicating pores are easy to be formed.

The compacts are placed in a sintering furnace, and sintered in an atmosphere containing substantially no oxygen usually at a temperature of 800° to 1,200°C for 30 minutes to 4 hours. The thermosetting resin thermally decomposes and gasifies by temperature rise, and at that time, carbon may deposit on the metallic particles and corrode their surfaces. In case that a polyimide resin has been employed as a thermosetting resin, such a phenomenon is little and the decomposition gas is substantially harmless. Preferably, in order to avoid the possible deposition of carbon, the gas removal is conducted, while the rate of generation of the decomposition gas is controlled by adjusting the rate of temperature elevation. The generated gas is removed by evacuation of the sintering furnace with or without introduction of hydrogen, argon or helium gas so that the inside of the sintering furnace is in the vacuum state or under an atmosphere of hydrogen, argon or helium.

The sintered body prepared according to the present invention has fine, uniform pores and a high porosity. The pore size of the sintered body of the invention is not more than about 15 μm, especially not more than about 10 μm, and accordingly the sintered body is particularly useful as a filter for precise collection of fine contaminants. The sintered body for use as a filter has a filtration size of not more than about 15 μm, especially not more than about 10 μm. Further, since the porosity is high and the pore size is uniform, the sintered body for use as a filter has the advantages that the pressure loss is small the filtration capacity is high and the filtration life is long. The porosity of the sintered body of the invention is not less than 45%, especially not less than 50%. It is possible to prepare a sintered body within 1% error of the porosity. Also, the ratio of the intersecting point pressure $(P_1)$ to the initial bubble point pressure $(P_0)$ of the present sintered body is not more than 1.35. The $P_1/P_0$ value is a measure for the pore size distribution, namely the uniformity of pore size, and the nearer the $P_1/P_0$ value comes to 1, the more uniform the pore size.

The term "porosity" as used herein means the percentage of the pore volume in a sintered body.

The term "initial bubble point pressure" $P_0$ and the term "intersecting point pressure" $P_1$ as used herein are those provided in the filtration size test of Japanese Industrial Standard (JIS) B 8356. The initial bubble point pressure is a pressure when a bubble generates first in the filtration size test, and is a measure for the maximum pore in a sintered body. The intersecting point pressure is a pressure at the intersecting point of the lines extrapolated from the large variation portion and the small variation portion on a curve of variation of the air pressure against the amount of flowing air in the filtration size test.

In addition to the use as a filter, the sintered body of the present invention is also suitable for use as oil impregnated metals.

The present invention is more specifically described and explained by means of the following Examples.

Example 1

A SUS 304 stainless steel atomized powder (under 200 meshes) and a fibrous powder (commercially available under the registered trademark "Naslon" made by Nippon Seisen Co., Ltd.) which was stainless steel short fibers having a diameter of 12 μm and a length of 40 μm were admixed in a ratio of 1:1 by weight. The mixed powder was admixed with 1% by weight of a polyimide powder (commercial name "Kerimid 601", product of Rhone-Poulenc sold by Yakushi Kasei Kabushiki Kaisha) based on the weight of the mixed powder. The mixture was compressed at 230°C and 100 kg/cm² (98 bar) for 10 minutes by employing a hot press machine shown in Fig. 1 to form a compact of circular plate having a diameter of 60 mm. The compact was placed in a sintering furnace, and the temperature was gradually elevated under vacuum while removing the decomposition gas of polyimide. The temperature was elevated to 1,150°C, and at that temperature, the compact was sintered for 3 hours to give a sintered body.

The properties of the obtained sintered body are shown in Table 1.

Examples 2 to 7

A SUS 304 stainless steel powder and a Naslon fibrous powder having a diameter of 12 μm and a length of 40 μm were employed alone or in admixture thereof as a powder. The powder was surface-treated by admixing 500 g of the powder with 50 ml of a 30% by weight tetrahydrofuran solution of a phenol resin (commercial name "Sumicon PM-40", product of Sumitomo Bakelite Kabushiki Kaisha) with agitation, during which tetrahydrofuran naturally evaporated. The powder was compressed at 200°C and 100 kg/cm² (98 bar) for 10 minutes by employing a hot press machine shown in Fig. 1 to form compacts of circular plate having a diameter of 60 mm. The compact were sintered in the same manner as in Example 1.

The properties of the obtained sintered bodies are shown in Table 1. There are also shown for comparison in Table 1 the properties of Filter 05 (Comparative Example 1), Filter 07 (Comparative Example 2) and Filter 10 (Comparative Example 3) which are commercially available filters made of a stainless steel powder by Ugine Carbon Co., France.

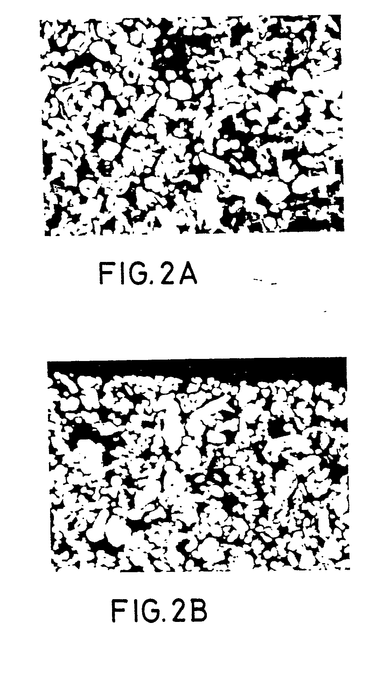

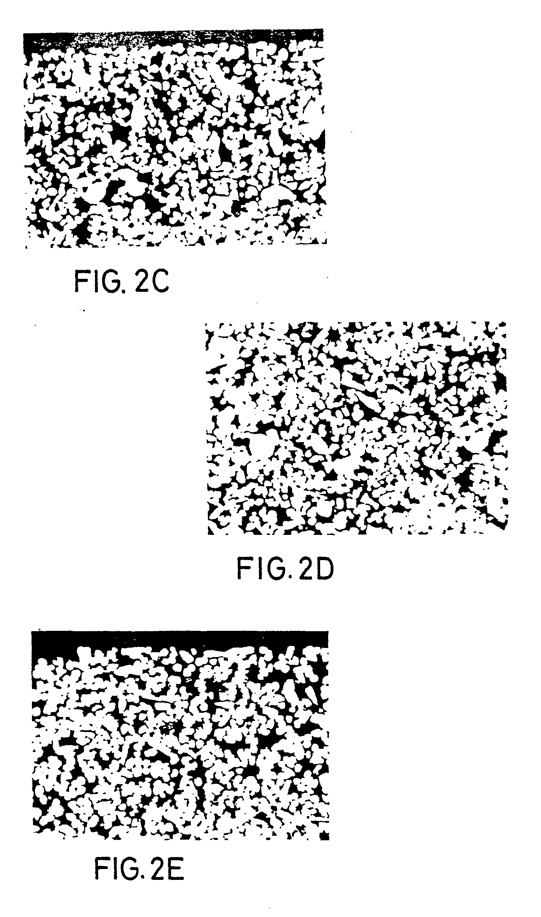

Figs. 2A to 2E show microphotographs of the sections of the sintered bodies obtained in Examples 2 (Fig. 2A), 3 (Fig. 2B), 4 (Fig. 2C), 6 (Fig. 2D) and 7 (Fig. 2E).

In Table 1, the initial bubble point pressure $P_0$ and the intersecting point pressure $P_1$ were measured according to the filtration size test of JIS B 8356. $D_M$ shows the maximum pore diameter and $D_m$ shows the intermediate pore diameter.

Also, the flow performance was measured as follows: Water was passed through a sintered body by a pump, and when the pressure loss measured by a manometer became 0.1 kg/cm², flow rate of water which passed through the sintered body was measured by a flow meter. The permeability was calculated from the flow rate of water and the pressure loss according to the Darcy's law.

Further, the pressure loss against the flow rate of a liquid having a viscosity of 2,000 poise was measured. The relationship between the pressure loss and the flow rate is shown in Fig. 4A, in which lines 1, 4, 5, C1, C2 and C3 are for Examples 1, 4 and 5 and Comparative Examples 1, 2 and 3, respectively.

Filtration efficiency and 98% filtration size were measured as follows: Air cleaner fine test dust (ACFTD) having various particle sizes were employed as contaminants. ACFTD was dispersed in distilled water in a concentration of 0.5 g./liter, and the dispersion was filtered through a sintered body with suction of 30 mmHg. The filtration efficiency is shown by the percentage of ACFTD filtered off. In Table 1, the results of the measurement with respect to ACFTD having particle sizes of 3 μm and 5 μm are shown. The 98% filtration size showing a size of particles of which 98% is filtered off was obtained from a graph of the filtration efficiency against the particle size of ACFTD obtained by the above measurement.

Constant pressure filtration test was carried out as follows: ACFTD having an average particle size of 7 μm was dispersed as contaminants in distilled water in a concentration of 0.5 g/liter. The dispersion was filtered through a sintered body with suction of 30 mmHg, and the amount of the filtrate was measured with the lapse of time. The results are shown in Fig. 5. The amount of the filtrate obtained until the end velocity reaches 0.1 ml/s and the time required (filtration life) were also calculated according to the Ruth's equation of the constant pressure filtration. They are shown in Table 1.

TABLE 1

| Example No. | 1 | 2 | 3 | 4 | 5 | 6 | 7 | Com. Ex. 1 | Com. Ex. 2 | Com. Ex.3 |
|---|---|---|---|---|---|---|---|---|---|---|
| Atomized powder/Naslon powder | 1/1 | 1/0 | 2/1 | 1/1 | 1/1 | 1/2 | 0/1 | — | — | — |
| Thermosetting resin | Polyimide | Phenol resin | Phenol resin | Phenol resin | Phenol resin | Phenol resin | Phenol resin | — | — | — |
| Thickness of sintered body (mm) | 1.00 | 1.76 | 1.59 | 1.65 | 1.02 | 1.43 | 1.59 | 2.0 | 2.0—2.04 | 1.93—1.96 |
| Porosity (%) | 51.6 | 54.7±0.3 | 51.7±1 | 51.6±0.4 | 51.6±0.4 | 50.5±1 | 50.0±0.7 | 36 | 27.4—30 | 26.7—28.5 |
| Filtration size test | | | | | | | | | | |
| $P_0$ (mmH$_2$O) | 588 | 452 | 589 | 616 | 589 | 698 | 807 | 527 | 417 | 325 |
| $P_1$ (mmH$_2$O) | 754 | 592 | 767 | 780 | 754 | 932 | 992 | 789 | 786 | 392 |
| $P_1/P_0$ | 1.28 | 1.31 | 1.30 | 1.27 | 1.28 | 1.34 | 1.23 | 1.50 | 1.89 | 1.21 |
| $D_M$ ($\mu$m) | 6.1 | 8.1 | 6.2 | 5.9 | 6.2 | 5.2 | 4.5 | 6.2 | 8.7 | 11.2 |
| $D_m$ ($\mu$m) | 4.8 | 6.1 | 4.7 | 4.7 | 4.1 | 3.9 | 3.7 | 4.6 | 4.7 | 9.3 |
| Flow performance | | | | | | | | | | |
| Permeability (water) ($\times 10^4$ cm$^2$) | 0.82 | 1.515 | 1.075 | 1.034 | 0.841 | 0.825 | 0.655 | 0.457 | 1.19 | 1.28 |
| Flow rate at 0.1 kg/cm$^2$ pressure loss (ml/cm$^2$/min) | 42 | 52 | 41 | 38 | 50 | 35 | 25 | 14 | 38 | 40 |
| Filtration efficiency(%) | | | | | | | | | | |
| Particles of 3 $\mu$m diameter | 94.2 | 88.5 | 95 | 95.5 | 94 | 99.5 | 99.8 | 93 | 85.5 | 45.5 |
| Particles of 5 $\mu$m diameter | 98.3 | 95 | 98.6 | 99.2 | 98 | 99.8 | 99.9 | 96.9 | 94.5 | 52.7 |
| 98% filtration size ($\mu$m) | 4.8 | 10 | 4.5 | 4 | 5 | 0.6 | 0.2 | 6.1 | 8 | 33 |
| Constant pressure filtration test | | | | | | | | | | |
| Amount of filtrate (ml) | 321 | 103.2 | 148.5 | 264.3 | 229.2 | 118.9 | 105.8 | 28.4 | 92.5 | 74.7 |
| Filtration life (sec) | 1100 | 456.2 | 668.3 | 1246 | 1070.3 | 552.4 | 498.3 | 98.1 | 497.2 | 244.4 |

As is clear from Table 1, the porosity of the sintered bodies of the present invention is very high. Moreover, the pore size is very small. This would be understood from the values of the 98% filtration size and the initial bubble point pressure $P_0$. As stated before, the bubble point pressure is the force expressed in terms of the height of liquid column which is required to break a liquid membrane formed over the opening of a pore, and is a measure for the maximum pore in a sintered body. The higher the initial bubble point pressure, the smaller the pore size. Further, the $P_1/P_0$ values of the sintered bodies of the present invention are smaller than those of filters put on the market and are near 1. This shows that the pore size of the sintered bodies of the invention is uniform, in other words, the pore size distribution is narrow. Like this, the sintered body of the present invention has fine pores of uniform size and moreover has a high porosity. Such a sintered body has not been known. For instance a conventional sintered body of Comparative Example 1 has similar initial bubble point pressure and filtration size to those of the sintered bodies of the invention, but the porosity is small and also the pore size is not uniform.

Fig. 4A shows the relationship between the pressure loss and the flow rate. From it, it would be understood that the sintered body of the present invention is low in pressure loss, despite that the pore size is very small. For instance, the pressure loss of the sintered bodies of Examples 1 and 5 is lower than that of Comparative Example 2, despite that the initial bubble point pressure is far higher than that of Comparative Example 2.

Fig. 5 shows the relationship between the amount of filtrate and the time. As is clear from Fig. 5, the sintered body of the present invention has a high capacity of collecting contaminants and a long life as a filter. This is also clear from Table 1. Like this, since the sintered body of the present invention has a high porosity and the pores are fine and uniform, the filtration capacity is high and the filtration life is long, and moreover precise collection of fine contaminants is possible. On the other hand, conventional sintered bodies as filters of Comparative Examples 1 to 3 cause choking of the pores in a short period of time and the filtration life is short due to low porosity and ununiformity in pore size, as is clear from Table 1 and Fig. 5.

**Claims**

1. A metallic sintered body which is composed of fine metallic particles and has a porosity of at least 45%, a ratio of the intersecting point pressure to the initial bubble point pressure of not more than 1.35 and a filtration size of not more than about 15 μm, obtainable by compacting fine metallic particles consisting of a mixture of a metal powder and a fibrous metal powder with a thermosetting resin at a temperature of 50°C to 250°C under a pressure of 49 to 196 bar for about 5 to about 30 minutes, and sintering the resulting compact at a temperature of 800°C to 1,200°C for 30 minutes to 4 hours.

2. The sintered body of claim 1, wherein the porosity is at least 50% and the filtration size is not more than about 10 μm.

3. The sintered body of claim 1, wherein the fine metallic particles are a mixture of a metal powder and a stainless steel fibrous powder in a ratio of 20:80 to 80:20 by weight, said metal powder having a particle size of not more than about 76 μm and said stainless steel fibrous powder having a diameter of 2 to 20 μm and an aspect ratio of the length to the diameter in the range of 3 to 50.

4. The sintered body of claim 3, wherein the ratio of the metal powder to the fibrous powder is from 40:60 to 60:40 by weight.

5. A process for preparing a metallic sintered body which comprises compacting fine metallic particles consisting of a mixture of a metal powder and a fibrous metal powder, characterised in that the metallic particles are compacted with a thermosetting resin at a temperature of 50°C to 250°C under a pressure of 49 to 196 bar for about 5 to about 30 minutes, and that the resulting compact is sintered at a temperature of 800°C to 1,200°C for 30 minutes to 4 hours.

6. The process of claim 5, characterised in that the thermosetting resin is a member selected from the group consisting of a polyimide resin and a phenol resin.

7. The process of claim 5, characterised in that the fine metallic particles are a mixture of a metal powder and a stainless steel fibrous powder in a ratio of 20:80 to 80:20 by weight, said stainless steel fibrous powder having a diameter of 2 to 20 μm and an aspect ratio of the length to the diameter in the range of 3 to 50.

8. The process of claim 5, characterised in that the sintering is carried out in an atomosphere containing substantially no oxygen.

**Patentansprüche**

1. Metallischer Sinterkörper, bestehend aus feinen Metallteilchen und mit einer Porosität von mindestens 45%, einem Verhältnis des Schnittpunkt-Drucks zum ursprünglichen Blasenpunkt-Druck von nicht mehr als 1,35 und einer Filtrationsgröße von nicht mehr als etwa 15 μm, erhältlich durch Kompaktieren von feinen Metallteilchen, bestehend aus einem Gemisch eines Metallpulvers und eines faserartigen Metallpulvers, mit einem wärmehärtbaren Harz, bei einer Temperatur von 50°C bis 250°C, unter einem Druck von 49 bis 196 bar, während etwa 5 bis etwa 30 Minuten, und Sintern des resultierenden kompakten Materials bei einer Temperatur von 800°C bis 1200°C während 30 Minuten bis 4 Stunden.

2. Sinterkörper nach Anspruch 1, bei dem die Porosität mindestens 50% ist und die Filtrationsgröße nicht mehr als etwa 10 μm beträgt.

3. Sinterkörper nach Anspruch 1, bei dem die feinen Metallteilchen ein Gemisch eines Metallpulvers und eines faserartigen Pulvers aus rostfreien Stahl in einem Verhältnis von 20: 80 bis 80:20, bezogen auf das Gewicht, sind, wobei das Metallpulver eine Teilchengröße von nicht mehr als etwa 76 µm und das faserartige Pulver aus rostfreiem Stahl einen Durchmesser von 2 bis 20 µm und ein Abmessungsverhältnis von Länge zu Durchmesser im Bereich von 3 bis 50 hat.

4. Sinterkörper nach Anspruch 3, bei dem das Verhältnis des Metallpulvers zum faserartigen Pulver 40:60 bis 60:40, bezogen auf das Gewicht, beträgt.

5. Verfahren zur Herstellung eines metallischen Sinterkörpers durch Kompaktieren feiner Metallteilchen, bestehend aus einem Gemisch eines Metallpulvers und eines faserartigen Metallpulvers, dadurch gekennzeichnet, daß die Metallteilchen mit einem wärmehärtbaren Harz bei einer Temperatur von 50°C bis 250°C unter einem Druck von 49 bis 196 bar während etwa 5 bis etwa 30 Minuten kompaktiert werden, und daß das resultierende kompakte Material bei einer Temperatur von 800°C bis 1200°C während 30 Minuten bis 4 Stunden gesintert wird.

6. Verfahren nach Anspruch 5, dadurch gekennzeichnet, daß das wärmehärtbare Harz ausgewählt ist aus der Gruppe eines Polyimidharzes und eines Phenolharzes.

7. Verfahren nach Anspruch 5, dadurch gekennzeichnet, daß die feinen Metallteilchen ein Gemisch von einem Metallpulver und einem faserartigen Pulver aus rostfreiem Stahl in einem Verhältnis von 20:80 bis 80:20, bezogen aus das Gewicht, sind, wobei das faserartige Pulver aus rostfreiem Stahl einen Durchmesser von 2 bis 20 µm und ein Abmessungsverhältnis von Länge zu Durchmesser im Bereich von 3 bis 50 hat.

8. Verfahren nach Anspruch 5, dadurch gekennzeichnet, daß das Sintern in einer Atmosphäre durchgeführt wird, die im wesentlichen keinen Sauerstoff enthält.

**Revendications**

1. Corps fritté métallique qui est composé de fines particules métalliques et présente une porosité d'au moins 45%, un rapport de la pression au point d'intersection à la pression initiale au point de barbotage qui n'est pas supérieur à 1,35 et une dimension de filtrage qui ne dépasse pas environ 15 µm, qu'on obtient en agglomérant les fines particules métalliques consistant en un mélange d'une poudre métallique et d'une poudre métallique fibreuse avec une résine thermodurcissable à une température de 50 à 250°C sous une pression de 49 à 196 bars pendant environ 5 à 30 minutes et en frittant l'aggloméré résultant à une température de 800 à 1200°C pendant 30 minutes à 4 heures.

2. Corps fritté selon la revendication 1, dans lequel la porosité est d'au moins 50% et la dimension de filtration ne dépasse pas environ 10 µm.

3. Corps fritté selon la revendication 1, dans lequel les particules métalliques fines sont un mélange d'une poudre métallique et d'une poudre fibreuse en acier inoxydable en un rapport de 20:80 à 80:20 en poids, ladite poudre métallique ayant une granulométrie qui n'est pas supérieure à environ 76 µm et ladite poudre fibreuse d'acier inoxydable présente un diamètre de 2 à 20 µm et un rapport de la longueur au diamètre compris entre 3 et 50.

4. Corps fritté selon la revendication 3, dans lequel le rapport de la poudre métallique à la poudre fibreuse est de 40:60 à 60:40.

5. Procédé de préparation d'un corps fritté métallique, qui consiste à agglomérer des fines particules métalliques comprenant un mélange d'une poudre métallique et d'un poudre métallique fibreuse, caractérisé en ce qu'on agglomère les particules métalliques avec une résine thermodurcissable à une température de 50 à 250°C sous une pression de 49 à 196 bars pendant environ 5 à 30 minutes et en ce qu'on fritte l'aggloméré résultant à une température de 800 ù 1200°C pendant une durée de 30 minutes à 4 heures.

6. Procédé selon la revendication 5, caractérisé en ce que la résine thermodurcissable est choisie parmi une résine de polyimide et une résine phénolique.

7. Procédé selon la revendication 5, caractérisé en ce que les particules métalliques fines sont un mélange d'une poudre métallique et d'une poudre fibreuse en acier inoxydable dans un rapport pondéral de 20:80 à 80:20, ladite poudre fibreuse d'acier inoxydable ayant un diamètre de 2 à 20 µm et un rapport de la longueur au diamètre compris entre 3 et 50.

8. Procédé selon la revendication 5, caractérisé en ce qu'on effectue le frittage dans une atmosphère ne contenant pas d'oxygène.

FIG.1

FIG. 2A

FIG. 2B

FIG. 2C

FIG. 2D

FIG. 2E

FIG. 4 A